# EUROPEAN PATENT APPLICATION

(11) **EP 1 227 382 A2**
(43) Date of publication of application: **31.07.2002**
(21) Application number: 02090032.0
(22) Date of filing: 23.01.2002
(51) Int. Cl.: G05B 23/02

(54) **Rolling stock diagnostic condition monitoring and on-line predictive maintenance**

(30) Priority: 24.01.2001 US 263734 P
(71) Applicant: Bombardier Transportation GmbH, 13627 Berlin (DE)
(72) Inventor: Sartsangi, Kuldip Deep, Clairton, PA 15205 (US)
(74) Representative: Karlhuber, Mathias

(57) **Abstract**

Rolling stock equipment is disclosed that has a predictive diagnostic system to enable condition-based maintenance. The rolling stock equipment has vibration transducers (20) on key equipment. Data from the transducers is periodically sampled. The data is analyzed to determine if a fault condition exists by comparing the vibration signatures to defined threshold levels. If a threshold level is exceeded, a fault warning is produced to alert maintenance staff that preventative maintenance should be performed.

## Description

### BACKGROUND OF THE INVENTION

### 1. Field of the Invention

The present invention is directed to rolling stock equipment incorporating a predictive diagnostic system for rotating parts. The predictive diagnostic system acquires vibration data from the rotating parts for use in condition monitoring and predictive maintenance.

### 2. Description of the Prior Art

Currently, rolling stock equipment requires labor-intensive preventative maintenance in order to ensure high reliability. This "time-based" approach often fails to detect incipient problems developing within subsystems until significant equipment deterioration or a failure happens. By that time, the faulty equipment may have also caused significant collateral damage to other parts of the equipment, which may lead to an unexpected service interruption.

### SUMMARY OF THE INVENTION

It is an object of this invention to provide an alternative to schedule-based maintenance of rolling stock equipment which will reduce maintenance costs and increase maintenance efficiency while maintaining or increasing the availability of the rolling stock.

A properly designed and maintained piece of equipment will have fairly uniform and stable vibration levels over time. As the equipment ages, several factors may cause degradation of equipment performance. This degradation leads to conditions, such as, equipment unbalance, wheel flat spots, bearing faults, motor-gear unit misalignment, axial thrusting, damaged or broken gear teeth, and misalignment in door operator drives. If not detected and corrected in a timely fashion, these conditions may lead to equipment failure. Elevated levels of vibrations often precede the mechanical equipment failures. Therefore, when a fault condition develops, it will manifest itself as discrete harmonics in the vibration spectrum of that piece of equipment. Periodic trending of vibration signatures can thus alert engineers of an impending fault condition, allowing for timely action by the maintenance staff at a routine downturn, which in turn may prevent an unscheduled service interruption.

Accordingly, we have developed a predictive diagnostic system for rolling stock equipment which monitors vibration data and identifies when maintenance is necessary based on equipment conditions. During operation of the equipment, vibration signatures are checked for characteristic deviations that indicate an impending failure. Deviations are detected by determining whether operating amplitudes exceed a pre-set threshold level. When the threshold is exceeded, an indication of the required maintenance can be provided.

The diagnostic system is able to predict rolling stock equipment failures far enough in advance so that the required maintenance can be performed during scheduled maintenance periods. The benefit of using predictive diagnostics is that the equipment will not be over-maintained, but rather maintained only when necessary, resulting in a reduction in degradation-type failures, a reduction in maintenance costs, an increase in maintenance efficiency, and an increase in fleet availability.

The present invention is a method and apparatus for antomatic data acquisition and analysis of rolling stock equipment for condition monitoring and predictive maintenance. Data is sampled via vibration transducers located at key equipment locations. The data is acquired at regular intervals and stored in non-volatile memory. The data is then retrieved by a laptop PC and analyzed with condition monitoring software to identify abnormal equipment conditions. The data may be trended to see progression of a developing fault condition, for example, on an annotated waterfall plot. Predefined windows for the fault frequencies and threshold setpoint levels are defined in the software to generate an equipment condition status report for the maintenance staff. Vibration treading of equipment faults may alert the operations staff of frequent faults, such as equipment unbalance (leading to abnormal vibrations in HVAC & propulsion blowers), wheel flat spots, bearing faults (e.g., looseness, defects developing on bearing races due to stray ground current, improper lubrication, etc.), motor-gear unit misalignment, axial thrusting, damaged or broken gear teeth, and misalignment developing in door operator drives (as a result of wear or looseness).

### BRIEF DESCRIPTION OF THE DRAWINGS

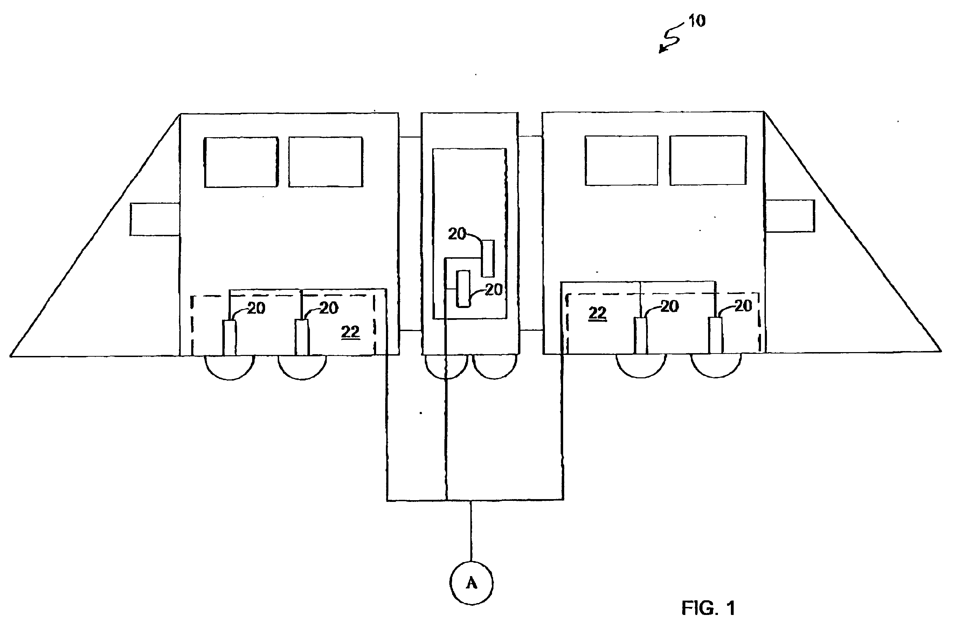

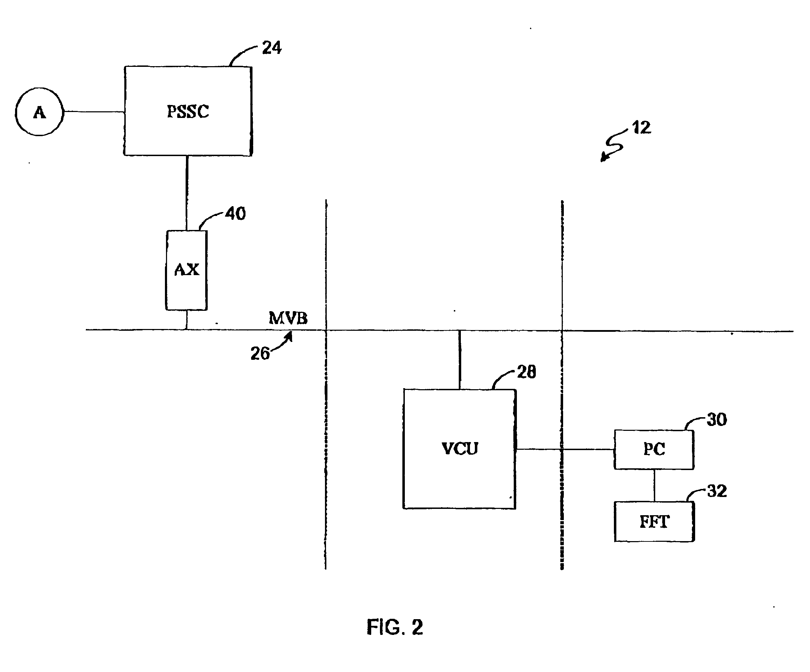

Figs. 1-2 are schematic views of the present invention.

### DESCRIPTION OF THE PREFERRED EMBODIMENTS

A complete understanding of the invention will be obtained from the following description when taken in connection with the accompanying drawing figures wherein like reference characters identify like parts throughout.

For purposes of the description hereinafter, the terms "upper", "lower", "right", "left", "vertical", ''horizontal", "top", ''bottom", and derivatives thereof shall relate to the invention as it is oriented in the drawing figures. However, it is to be understood that the invention may assume various alternative variations and step sequences, except where expressly specified to the contrary. It is also to be understood that the specific devices and processes illustrated in the attached drawings, and described in the following specification, are simply exemplary embodiments of the invention. Hence, specific dimensions and other physical characteristics related to the embodiments disclosed herein are not to be considered as limiting.

Figs. 1-2 illustrate rolling stock equipment (or a vehicle) 10 with a predictive diagnostic system 12. Piezoelectric vibration transducers 20 are installed at key equipment locations 22. Equipment vibration signals (data) are sampled at periodic intervals by a signal conditioner and scanner (PSSC) 24. The data is transferred across a multifunctional vehicle bus (MVB) 26 and stored in non-volatile memory of a vehicle control unit (VCU) 28. A PC 30 retrieves the data from the VCU 28. Data sampling filtering and analysis takes place in the FFT analyzer 32 that accesses the PC 30. The PC 30 stores and displays the vibration signatures of the equipment 22. Certain operating parameters for the vehicle 10, for example, operating speed (RPM from the shaft encoders), vehicle identification, load, and bearing temperature, are also recorded to facilitate analysis by the PC 30.

Various types of defects generate various characteristic frequency spectra. The spectra are analyzed using pre-defined frequency bands and threshold levels. Thus, the PC 30 analyzes the vibration signatures in relation to defined thresholds. Initial threshold levels may be defined based on experience or manufacturer recommendations, but the levels may be adjusted over time. When a vibration signature exceeds the threshold level, an alarm is generated for the equipment 22. The alarm may simply indicate that a fault is present or indicate that a particular fault has been detected. The alarm is an indication that the equipment should be flagged for inspection during the next scheduled maintenance outage. Quite often, if correction of equipment problems occurs early, further deterioration of the equipment condition is inhibited. The archived data also may be more closely scrutinized by the maintenance staff to look for the reasons for the abnormal response.

Commercially available hardware and software that is customized, programmed, and installed on PC 30 may be used to perform the measurements, analysis, and detection of rotating equipment faults. An example of commercially available software is Entek™.

The following are examples of problems characterized by specific vibration signatures that can be detected by the predictive diagnostic system. Antifriction bearings operating with inadequate lubrication or in very early stages of defect formation show elevated levels of vibratory energy at high frequency (called GSE or HFD) with very small vibratory amplitude. This condition, if uncorrected, may eventually lead to the formation of race defect. Timely attention to lubrication may stop this condition from worsening and improve equipment reliability. Wheel flat spots typically generate a periodic excitation of the wheel. A threshold response level can be defined to detect the onset of wheel flat spots. Blower failures are often associated with metal fatigue due to high levels of dynamic stresses caused by unbalance. This condition may be readily detected by synchronous averaging of the blower vibration signature. Door failures are often associated with driveline misalignments (due to wear or loosening of the mounting bolts). This condition may be detected in the vibration signatures as harmonics and sub-harmonics of the drive shaft speed. Threshold levels can be defined to detect this abnormality and the diagnostic module will flag it for inspection.

It will be understood by those skilled in the art that while the foregoing description sets forth in detail preferred embodiments of the present invention, modifications, additions, and changes might be made thereto without departing from the spirit and scope of the invention.

## Claims

1. A predictive diagnostic system for rolling stock equipment, comprising:
a piece of equipment;
a vibration transducer positioned on the piece of equipment;
a signal conditioner and scanner electrically connected to the vibration transducer and configured to sample data from the vibration transducer;
a vehicle control unit electrically connected to the signal conditioner and scanner and having a non-volatile memory, the non-volatile memory configured to receive the data transferred from the signal conditioner and scanner and store the data;
a personal computer electrically connectable to the vehicle control unit and configured to retrieve the data from the non-volatile memory and store the data; and
an FFT analyzer electrically connected to the personal computer and configured to access the data and analyze the data to determine a vibration signature of the piece of equipment,
wherein the personal computer stores the analyzed data and displays the vibration signature.

2. The predictive diagnostic system as claimed in claim 1, wherein the vibration transducer is a piezoelectric vibration transducer.

3. The predictive diagnostic system as claimed in claim 1, wherein the data is an equipment vibration signal.

4. The predictive diagnostic system as claimed in claim 1, further including a plurality of pieces of equipment and a plurality of vibration transducers positioned on the plurality of pieces of equipment.

5. The predictive diagnostic system as claimed in claim 1, wherein the signal conditioner and scanner samples the data at pre-determined periods.

6. The predictive diagnostic system as claimed in claim 1, wherein the personal computer stores operating parameters for use by the FFT analyzer in the analysis of the data.

7. The predictive diagnostic system as claimed in claim 6, wherein the FFT analyzer uses pre-defined frequency bands and threshold levels to analyze the data.

8. The predictive diagnostic system as claimed in claim 1, further including a multifunctional vehicle bus electrically connected to the signal conditioner and scanner and to the vehicle control unit, the multifunctional vehicle bus configured to transfer the data between the signal conditioner and scanner and the vehicle control unit.

9. A method for diagnosing rolling stock equipment, comprising the steps of:
sampling data from at least one vibration transducer positioned on at least one piece of equipment of the rolling stock equipment;
transferring the data to a non-volatile memory of a vehicle control unit;
retrieving the data from the non-volatile memory using a personal computer;
storing the data on the personal computer; and
analyzing the data to determine a vibration signature of the at least one piece of equipment.

10. The method as claimed in claim 9, wherein the step of analyzing the data includes the step of using pre-defined frequency bands and threshold levels.

11. The method as claimed in claim 10, further including the step of defining initial threshold levels based on experience or manufacturer recommendations.

12. The method as claimed in claim 11, further including the step of adjusting the initial threshold levels.

13. The method as claimed in claim 10, further including the step of generating an alarm when the vibration signature exceeds the threshold level.

14. The method as claimed in claim 9, further including the step of displaying the vibration signature of the at least one piece of equipment on the personal computer.
